# EUROPÄISCHE PATENTSCHRIFT

(11) **EP 1 218 207 B1**
(45) Veröffentlichungstag und Bekanntmachung des Hinweises auf die Patenterteilung: **09.07.2008**
(21) Anmeldenummer: 01967001.7
(22) Anmeldetag: 10.08.2001
(51) Int. Cl.: B60J 1/20

(54) **ROLLOSTEUERUNG FÜR ROLLOS IN KRAFTFAHRZEUGEN**
CONTROL SYSTEM FOR BLINDS IN MOTOR VEHICLES
SYSTEME DE COMMANDE POUR STORES INSTALLES DANS DES VEHICULES AUTOMOBILES

(30) Priorität: 25.08.2000 DE 10041709
(43) Veröffentlichungstag der Anmeldung: 03.07.2002
(60) Teilanmeldung: 07010657.0
(73) Patentinhaber: BOS GmbH & Co. KG, 73760 Ostfildern (DE)
(72) Erfinder: SCHLECHT, Werner, P., 71665 Vaihingen/Enz (DE); SEEL, Holger, 71134 Aidlingen (DE); LAUDENBACH, Thomas, 72108 Rottenburg (DE)
(74) Vertreter: Rüger, Barthelt & Abel Patentanwälte
(86) Internationale Anmeldenummer: PCT/DE2001/003090
(87) Internationale Veröffentlichungsnummer: WO 2002/016153

(56) Entgegenhaltungen:
- EP-A- 0 424 328
- DE-A- 3 920 404
- US-A- 5 298 732

## Beschreibung

Beispielsweise aus der EP 0 240 747 C1 ist ein Heckscheibenrollo für Kraftfahrzeuge bekannt. Das Rollo weist eine drehbar gelagerte Wickelwelle auf, an der mit einer Kante eine Rollobahn befestigt ist. Mit Hilfe zweier Hebel, die in der Nähe der Wickelwelle schwenkbar gelagert sind, und an einer an der Rollobahn angebrachten Fallschiene eingreifen, kann die Rollobahn aufgespannt werden. Um die Rollobahn aufzuspannen, ist eine elektrische Antriebseinrichtung vorgesehen, die an den Schwenkhebeln angreift.

Dieses bekannte Heckscheibenrollo wird von Fahrzeugherstellern im Bereich der Hutablage eingebaut. Zur Betätigung, d.h. zum elektrischen Ein- und Ausfahren ist im Armaturenbrett ein vom Fahrer zu betätigender Schalter vorgesehen, um den Elektromotor entsprechend in Gang zu setzen. Üblicherweise sind noch Zeitsteuerungen oder stromabhängige Steuerungen vorhanden, um beim Erreichen der vollständig ausgefahrenen oder der eingefahrenen Stellung den Motorstrom abzuschalten.

Aus der gattungsbildenden DE 39 20 404 A1 ist zusätzlich eine Steuervorrichtung für ein Sonnenschutzrollo bekannt. Die Steuereinrichtung ist mit einer Sensoreinrichtung verbunden, die beim Einlegen des Rückwärtsgangs ein Signal an die Steuereinrichtung liefert. Auf diese Weise kann beim Einlegen des Rückwärtsgangs dafür gesorgt werden, dass ein gegebenenfalls ausgefahrenes Heckscheibenrollo eingefahren wird, um die Sicht nach hinten möglichst wenig zu behindern. Sobald der Rückwärtsgang wieder herausgenommen ist, wird das Rollo wieder in die ausgefahrene Stellung gebracht.

Ausgehend hiervon ist Aufgabe der Erfindung eine Rollosteuerung für Fensterrollos von Kraftfahrzeugen zu schaffen, die einen größeren Benutzerkomfort bietet.

Diese Aufgabe wird erfindungsgemäß durch die Rollosteuerung mit den Merkmalen des Anspruches 1 gelöst.

Weil der Steuereinrichtung ein ereignisabhängiges Signalisierungsmittel zugeordnet ist, kann sie unabhängig vom Fahrer bzw. Benutzer des Fahrzeugs gesteuert werden.

Es ist mit Hilfe der erfindungsgemäßen Anordnung möglich, das betreffende Rollo auch dann auszufahren, wenn sich niemand im Fahrzeug befindet, andererseits aber festgestellt wird, dass eine starke Sonneneinstrahlung erfolgt, die ein Abschatten des Fahrgastinnenraums als vorteilhaft erscheinen lässt, um eine übermäßige Erwärmung zu verhindern.

Frontscheibenrollos von PKW's oder insbesondere Nutzfahrzeugen können ohne Eingriff durch den Fahrer geöffnet oder geschlossen werden, und zwar abhängig von den Umweltbedingungen und der Stellung des Zündschlosses bzw. der Schließsituation des Türschlosses.

Andererseits kann ein vom Fahrer willkürlich ausgefahrenes Fensterrollo eingefahren werden, wenn es die spezielle Betriebssituation des Kraftfahrzeuges erfordert. Ein Beispiel hierfür ist das Heckscheibenrollo, das zum Beispiel selbsttätig heruntergefahren wird, wenn der Fahrer den Rückwärtsgang einlegt, wodurch die Sicht nach hinten wesentlich verbessert wird.

Ein anderes, nicht erfindungsgemäßes Anwendungsbeispiel ist das Rollo oder die verschiebliche Abdeckplane zum Abdecken des Kofferraums von Kombi-PKW. Es wird vorteilhafterweise zusammen mit dem Öffnen der Heckklappe in die geöffnete Stellung gefahren.

Weiterhin kann auf diese Weise auch ein nicht erfindungsgemäßes, elektrisch zu betätigendes Trenngitter gesteuert werden. In diesem Fall ist das Ereignis z. B. das Umlegen oder Aufrichten der Rücksitzlehne.

Zusätzlich zu der gennanten benutzerunabhängigen Steuerung kann ein durch den Benutzer gewillkürte Kontrolle bzw. Steuerung zweckmäßig sein. In diesem Falle ist zusätzlich ein zweites Signalisierungsmittel vorhanden, das durch den Fahrer oder Benutzer betätigt wird und die Stellung des Rollos vorgibt. Der Zustand der ersten Signalisierungsmittel kann die vom Benutzer vorgewählte Einstellung des Rollos übersteuern bzw. überdrücken.

Die Steuereinrichtung ist in die zentrale Kraftfahrzeugsteuerung implementiert, was zusätzliche Elektronik zu vermeiden hilft. Hierbei kann auf den oder die Prozessoren der zentralen Steuerung zurückgegriffen werden, wobei die eigentliche Steuereinrichtung für das Rollo praktisch zu einem Programmstück wird, dass in der zentralen Steuerung abläuft. Die zweiten Signalisierungsmittel, die durch den Fahrer willkürlich zu betätigen sind, können von einem Schalter oder Taster gebildet sein, oder es kann sich um eine Programmvariable handeln, deren Wert durch einen Schalter oder Taster verändert wird. Auch dieser Schalter oder Taster ist wiederum willkürlich durch den Fahrer zu betätigen.

Bei einer elektronischen Getriebesteuerung können die zweiten Signalisierungsmittel, die ereignisabhängig wirken, auch ein elektrisches Signal sein, das aus der zentralen Kraftfahrzeugssteuerung erhalten wird, bzw. eine entsprechende Programmvariable.

Als erstes Signalisierungsmittel kommen Sensoren in Frage, um beispielsweise lichtabhängig die Antriebseinrichtung des jeweiligen Fensterrollos selbsttätig in Gang zu setzen. Derartige Sensoren können licht- und/oder wärmeempfindliche Sensoren sein, beispielsweise Fotodioden, Fotowiderstände, temperaturabhängige Widerstände und dergleichen mehr.

Die ersten Signalisierungsmittel erfassen auch Signale mit denen ermittelt wird, ob die Zündung eingeschaltet ist. Die Steuerung kann so erfolgen, dass bei eingeschalteter Zündung die Licht- oder Temperaturabhängigen Sensoren abgeschaltet sind. Bei abgeschalteter Zündung hingegen werden die Fensterrollos ausschließlich abhängig davon gesteuert, was die Licht- oder Temperatursensoren an die Steuerungseinrichtung melden.

Das Programm kann auch dahingehend ergänzt sein, dass die durch die ersten Signalisierungsmittel veranlasste Einstellung des Fensterrollos übersteuert wird, wenn innerhalb einer vorgegebenen Zeit durch den Fahrer das erste Signalisierungsmittel im Sinne eines speziell gewünschten Zustands des jeweiligen Fensterrollos erneut betätigt wird.

Die obigen Varianten stellen nur eine kleine Auswahl einer Vielzahl denkbarer Alternativen, Abwandlungsmöglichkeiten und Umwelt- bzw Betriebsereignissen dar. Es werden deswegen auch solche Kombination von Merkmalen der abhängigen Ansprüche untereinander und mit dem Hauptanspruch beansprucht, die nicht Gegenstand eines speziellen Ausführungsbeispiels sind.

In der Zeichnung sind Ausführungsbeispiele des Gegenstandes der Erfindung dargestellt. Es zeigen:
- Fig. 1: eine Ansicht aus einem Kraftfahrzeug mit einem Seitenfensterrollo und einem Heckfensterrollo, in einer stark schematisierten perspektivischen Darstellung,
- Fig. 2: ein stark schematisiertes Blockschaltbild für die Steuerung des Fensterrollos,
- Fig. 3: ein anderes Blockschaltbild einer Rollosteuerung in Verbindung mit einer zentralen Kraftfahrzeugsteuerung, in einem stark schematisierten Blockschaltbild, und
- Fig. 4: ein vereinfachtes Flussdiagramm, wie es in einem Mikroprozessor oder Mikrocontroller bei den Ausführungsbeispielen nach den Figuren 3 und 4 ablaufen kann.

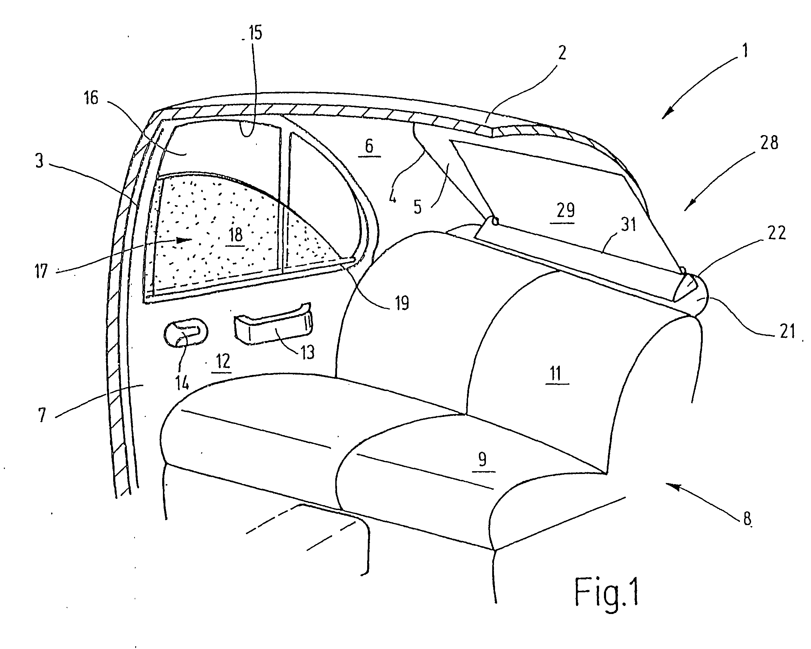

Fig. 1 stellt einen aufgebrochenen, abgeschnitten Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht, so sind beispielsweise Karosserie Innenstrukturen, wie Versteifungen und Befestigungsmittel nicht gezeigt, da ihre Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in eine Heckfensteröffnung 4 über, in der eine Heckscheibe 5 eingesetzt ist. Seitlich endet die Heckscheibenöffnung 4 an einer C-Säule 6, die sich im Abstand zu der B-Säule 3 befindet. Zwischen der B-Säule 3 und der C-Säule 6 ist an der B-Säule 3 eine hintere, reche Seitentür 7 in der bekannten Weise anscharniert.

Auf der Höhe der hinteren, rechten Seitentür 7 befindet sich eine Rücksitzbank 8, zu der eine Sitzfläche 9 sowie eine Rücksitzlehne 11 gehören.

Die dem Innenraum zugekehrte Innenseite der Seitentür 7 ist mit einer Innenverkleidung 12 versehen, an der ein Türgriff 13 befestigt ist und in dem eine Betätigungsklinke 14 eingelassen ist, um das Schloss der Seitentür 7 zu öffnen.

Die Seitentür 7 enthält oberhalb der Innenverkleidung 12 eine Fensteröffnung 15. In der Fensteröffnung 15 befindet sich eine in bekannter Weise versenkbare Seitenfensterscheibe 16.

Die Seitentür 7 ist mit einem Seitenfensterrollo 17 versehen, dessen Rollobahn 18 in den Darstellungen der Figur 1 teilweise ausgefahren ist, um so den Fondbereich der Fahrgastzelle gegen seitliche Sonneneinstrahlung zu schützen. Die Rollobahn 18 läuft durch einen unterhalb der Fensteröffnung 15 vorhandenen Schlitz 19.

Die Ausgestaltung des Seitenfensterrollos 17 ist in der nicht vorveröffentlichten Patentanmeldung DE 100 05 970 beschrieben.

Zusätzlich zu dem gezeigten Seitenfensterrollo, kann das Fahrzeug in beiden Seiten mit Fensterrollos beispielsweise auch im Bereich der vorderen Türen ausgestattet sein.

Hinter der Rücksitzlehne 11 befindet sich eine Hutablage 21, die den Raum zwischen der Rücksitzlehne 11 und der Unterkante der Heckscheibe 2 weitgehend ausfüllt. Auf dieser Hutablage 21 ist ein Gehäuse 22 eines Heckscheibenrollos 23 angeordnet. Das Heckscheibenrollo 28 weist eine aufgespannt veranschaulichte Rollobahn 29 auf, die aus einem Schlitz 31 des Gehäuses ausgezogen wird. Das Heckscheibenrollo 28 ist beispielsweise so gestaltet, wie dies in der EP 0 240 747 C1 ausführlich dargestellt ist.

Diese gezeigten Fensterrollos dienen dazu, die Sonneneinstrahlung in den Innenraum des Kraftfahrzeugs zu vermindern, um die Aufheizung auf Grund eines Treibhauseffektes zu vermindern.

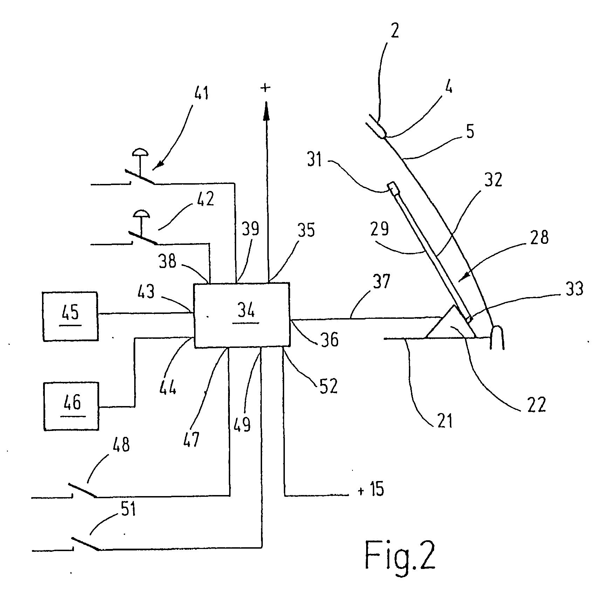

Figur 2 veranschaulicht ein Blockschaltbild für einen teilweise automatisierten Betrieb der Fensterrollos. Dabei wird beispielhaft die Steuerung des Heckfensterrollos 28 angegeben. Es versteht sich, dass die gegebene Erläuterung sinngemäß auch für die Seitenfensterrollos gilt.

In dem Gehäuse 22 befindet sich entsprechend dem Stand der Technik eine drehbargelagerte Wickelwelle, an der mit einer Kante die Rollobahn 29 befestigt ist. Die Wickelwelle wird mit Hilfe eines Federmotors im Sinne eines Aufwickelns der Rollobahn 29 vorgespannt. An der anderen Kante der Rollobahn 29 ist eine Zugschiene 31 befestigt, an der Schwenkhebel 32 angreifen, die bei 33 an dem Gehäuse 22 gelagert sind. Die Verschwenkung der Hebel 32 geschieht mit Hilfe eines nicht weitergezeigten Elektromotors über ein entsprechendes Getriebe. Der Elektromotor ist ein permanent erregter Gleichstrommotor, dessen Drehrichtung durch die Polarität der angeschlossenen Stromversorgung definiert wird.

Die Steuerung enthält ein eigentliches Steuergerät oder eine Steuereinrichtung 34 mit einem an das Bordnetz anzuschließenden Stromversorgungseingang 35 sowie einem Stromausgang 36, der über ein zweipoliges Verbindungskabel 37 mit dem Elektromotor des Heckscheibenrollos 28 verbunden ist.

Zwei weitere Eingänge 38 und 39 sind über entsprechende Leitungen mit zwei Handtastern 41 und 42 verbunden. Die Handtaster 41 und 42 sind beispielsweise Taster mit einer gemeinsamen Wippe und dazu vorgesehen, durch den Benutzer des Fahrzeugs oder auch einen anderen Fahrzeuginsassen manuell betätigt zu werden.

Die beiden Handtaster 41 und 42 dienen als Signalisierungsmittel, um abhängig von diesem Zustand die Bewegungsrichtung beziehungsweise den Zustand des Heckscheibenrollos 28 zu definieren.

Zwei weitere Eingänge 43 und 44 sind über betreffende Leitungen mit einem Lichtsensor 45 und einem Temperaturfühler 46 verbunden. Der Lichtsensor 45 besteht beispielsweise aus einer Fotodiode oder einem Cadmiumsulfid-Fotowiderstand, während der Temperatursensor ein temperaturempfindlicher Widerstand ein PTC- oder NTC-Widerstand sein kann.

Ein fünfter Eingang 47 liegt über eine betreffende Leitung an einem Schalter 48, der mit dem Schalt- oder Gangwahlhebel des Kraftfahrzeugs verbunden ist. Ein Eingang 48 steht mit einem Schalter 51 in Verbindung, der von der Heckklappe des Fahrzeugs betätigt wird, wenn es sich bei dem Fahrzeug um ein Kombi-Fahrzeug oder einen Pkw mit gro-ßer Heckklappe handelt, bei dem das gezeigte Heckfenster in der Heckklappe integriert ist.

Ein Eingang 52 ist schließlich mit der Klemme +15 des Zündschlosses bzw. der Zündspule verbunden, um der Steuerungseinrichtung 34 zu signalisieren, ob das Fahrzeug im Betrieb ist oder nicht.

Die Sensoren 35 und 46 sowie die Schalter 48 und 51 und das elektrische Signal an dem Eingang 52 stellen weiter Signalisierungsmittel dar, deren Zustand ereignisabhängig ist. Unter "ereignisabhängig" sollen hier sämtliche Ereignisse verstanden sein, die der Steuereinrichtung 34 übermittelt werden und sich aus dem Betriebszustand des Fahrzeugs sowie Umweltbedingungen ergeben mit Ausnahme des speziellen Wunsches von Fahrzeuginsassen hinsichtlich der Betriebsstellung des oder der betreffenden Fensterrollos.

Die Funktionsweise der dargestellten Rollosteuerung ist wie folgt:

Wenn der Benutzer des Fahrzeugs wünscht, dass das Heckscheibenrollo 28 ausgefahren wird, betätigt er kurzzeitig den Taster 41, wodurch ein Stromimpuls in den Eingang 39 der Steuereinrichtung 34 gelangt. Diese schaltet daraufhin mit der erforderlichen Polarität die über den Eingang 35 erhaltene Versorgungsspannung zu dem Ausgang 36 durch, damit der Motor des Heckscheibenrollos 28 über die zweipolige Leitung 37 Strom mit der erforderlichen Polarität erhält. Der Motor wird dadurch in Gang gesetzt, und verschwenkt die beiden Hebel 32 im Sinne eine Ausfahrens der Rollobahn 29.

Die Steuereinrichtung 34 hält die Stromversorgung für den Motor des Heckscheibenrollos 28 für eine vorbestimmte Zeit eingeschaltet, die mit Sicherheit länger ist als das Heckscheibenrollo 28 zum vollständigen Ausfahren benötigt.

Wenn das Heckscheibenrollo 28 an den mechanischen Anschlägen ankommt, wird die Bewegung des Motors blockiert und es tritt ein Blockierstrom auf. Nach Ablauf der oben erwähnten Zeit, die in der Steuereinrichtung 34 fest vorgegeben ist, wird der Motorstrom abgeschaltet.

Die Dauer, für die der Motor mit Strom versorgt wird, ist unabhängig davon, wie lange der Benutzer den Taster 41 betätigt hält.

Wenn der Benutzer einen Einfahren des Heckscheibenrollos 28 wünscht, betätigt er impulsweise den Taster 42. Die Steuereinrichtung 35 schaltet daraufhin die an dem Eingang 35 anliegend Spannung mit einer entsprechenden Polarität zu dem Ausgang 36 durch. Die Polarität ist der Polarität entgegengesetzt, die zum Ausfahren der Rollobahn 28 erforderlich ist.

Auch beim Einfahren wird wiederum der Elektromotor des Heckscheibenrollos 28 für eine vorbestimmte Zeit mit elektrischer Energie versorgt. Die Zeit ist in der Steuereinrichtung 34 so bemessen, dass das Heckscheibenrollo 28 mit Sicherheit eingefahren ist, ehe die Stromversorgung für den Motor abgeschaltet wird.

Je nach Programmierung der Steuereinrichtung 34 kann, bevor eine Funktion entsprechend den Tastern 41 und 42 ausgeführt wird, gegebenenfalls auch zuvor überprüft werden, ob das Fahrzeug im Betrieb ist. Hierzu wird das Signal an dem Eingang 42 abgefragt. Bei eingeschalteter Zündung, beziehungsweise laufendem Motor steht an der Klemme +15 des Zündschlosses beziehungsweise der Zündspule eine Spannung an, um zu signalisieren, dass das Fahrzeug in Betrieb ist. Abhängig von diesem Ereignis kann die manuelle Betätigung des Heckscheibenrollos 28 über die Taste 41 und 42 gesperrt sein, d.h. das Betätigen der Taste 41 und 42 führt nicht zu einer Stromabgabe der Steuereinrichtung 34 an den Motor.

Um den Benutzungskomfort zu erhöhen, ist der Lichtsensor 45 vorgesehen. Der Lichtsensor 45 ist beispielsweise in der Hutablage 21 integriert und so ausgerichtet, dass Sonnenlicht auf ihn fallen kann. Auf diese Weise ist der Lichtsensor 45 in der Lage, der Steuereinrichtung 34 zu signalisieren, ob eine starke Sonneneinstrahlung mit der Gefahr der Erwärmung des Fahrzeuginnenraums besteht oder nicht. Wenn diese Situation eintritt, was die Steuereinrichtung 24 über den Lichtsensor 45 ermittelt, sorgt die Steuereinrichtung 34 von sich aus ohne Betätigung des Tasters 41 dafür, dass an dem Ausgang 36 ein Strom für den Motor des Heckscheibenrollos 28 abgegeben wird, und zwar mit einer Polarität, die dem Ausfahren der Rollobahn 29 entspricht.

Auch bei einem automatischen Ausfahren, gesteuert über den Lichtsensor 45, ist eine zeitliche und betragsmäßige Strombegrenzung vorgesehen, wie dies oben im Zusammenhang mit den Tastern 41 und 42 bereits beschrieben ist.

Der Lichtsensor 45 kann sich an einer Stelle befinden, die nach dem Ausfahren der Rollobahn 29 unabhängig vom Sonnenstand immer durch die Rollobahn 41 abgeschattet ist. Damit die Rollobahn 29 die Steuereinrichtung 34 dann nicht irritiert, nimmt die Steuereinrichtung 34 nur das Auftreten einer starken Sonneneinstrahlung mit Hilfe des Lichtsensors 45 wahr. Ein erneutes Verschwinden der Sonneneinstrahlung infolge des Schattens durch die Rollobahn 29 führt nicht zum Einfahren des Heckscheibenrollos 28.

Es ist aber auch denkbar, den Lichtsensor 45 an einer Stelle unterzubringen, an der ständig das Sonnenlicht gemessen werden kann. Auf diese Weise ist es möglich, das Heckscheibenrollo 28 automatisch einzufahren, wenn die starke Sonneneinstrahlung an dem betreffenden Fenster verschwindet. Dazu überprüft, ähnlich wie beim Ausfahren, die Steuereinrichtung 34 das von dem Lichtsensor 45 gemeldete elektrische Signal mit einem entsprechenden Schwellwert und schaltet für das entsprechende Zeitintervall den Strom an dem Ausgang 36 ein.

Bei sehr niedrigen Außentemperaturen tritt zwar ein Treibhauseffekt auf, dessen Wirkung auf das Wohlbefinden der Fahrzeuginsassen keine Auswirkungen hat. In einem solchen Falle müsste das Heckscheibenrollo oder ein anderes Fensterrollo nicht ausgefahren werden. Damit die automatische Betätigung des Heckscheibenrollos 28 nur erfolgt, wenn der Treibhauseffekt den Komfort der Fahrzeuginsassen beeinträchtigt, ist der Temperatursensor 46 vorhanden.

Der Temperatursensor 46 signalisiert der Steuereinrichtung 34 die Innentemperatur des Fahrzeugs. Liegt die Innentemperatur unterhalb einer in der Steuerinrichtung 34 vorgegebenen Schwelle, ignoriert die Steuereinrichtung 34 ein Signal des Sonnensensors 45, wenn dieser eine starke Sonneneinstrahlung signalisiert. Erst beim Überschreiten der von dem Temperatursensor 46 signalisierten Innentemperatur, steuert die Steuereinrichtung 34 entsprechend dem von dem Lichtsensor 45 kommenden Signal, wie oben beschrieben, das Heckscheibenrollo 28.

Da gleiche Innentemperaturen durch die Fahrzeugheizung oder die Sonneneinstrahlung zustande kommen können, kann es zweckmäßig sein, zusätzlich noch den Betriebszustand der Heizung bzw. Klimaanlage zu überprüfen, und nur dann die selbsttätige Steuerung entsprechend dem von dem Lichtsensor 45 gelieferten Signal auszulösen, wenn die Temperatur im Fahrzeuginneren ohne die Fahrzeugheizung erreicht wird.

Umgekehrt kann es auch zweckmäßig sein die automatische Steuerung über den Lichtsensor 45 zu aktivieren, wenn die von dem Temperaturfühler 46 gemeldete Temperatur niedriger als ein eingestellter Schwellwert liegt, falls die Klimaanlage auf Kühlen steht.

Das ausgefahrene Heckscheibenrollo 28 verhindert nicht nur eine übermäßige Sonneneinstrahlung durch die Heckscheibe 5, sondern es behindert auch bis zu einem gewissen Grade die Sicht nach hinten durch die Heckscheibe 5. Im normalen Fahrbetrieb spielt dies keine Rolle, kann aber beim Rückwärtsfahren erheblich stören.

Bei der komfortablen Steuerung wie sie hier beschrieben ist, wird deswegen mit Hilfe des Schalters 48 die Stellung des Schalt- bzw. des Gangwahlhebels überprüft. Wenn der Fahrer den Rückwärtsgang einlegt, wird der Schalter 48 geschlossen, was die Steuereinrichtung 34 veranlasst an dem Stromausgang 36 den Motorstrom einzuschalten, und zwar mit einer Polarität, die zum Einfahren der Rollobahn führt.

Je nachdem wie die Steuereinrichtung 34 gestaltet ist, kann das Einschalten des Motorstroms an dem Ausgang 36 infolge eines Schließens des Schalters 48 davon abhängig gemacht werden, ob die Steuereinrichtung 34 zuvor das Heckscheibenrollo 28 ausgefahren hatte oder nicht.

Je nach Programmierung der Steuereinrichtung 24 kann nach dem Zurückschalten aus dem Rückwärtsgang zu dem Öffnen des Schalters 48 entweder das Heckscheibenrollo 28 geöffnet bleiben oder in die Betriebsstellung vor dem Einlegen des Rückwärtsgangs zurückgebracht werden.

Anstelle eines mechanischen Schalters 48 kann zum Abfühlen des Schalthebels bzw. Gangwahlhebels auch eine Feldplatte oder eine Hallsonde in Verbindung mit einem kleinen Permanentmagneten eingesetzt werden. Bei einer elektrischen Getriebesteuerung kann das Signal, das der Schalter 48 liefert, auch ein elektrisches Signal sein, das unmittelbar aus der Getriebesteuerung zugeführt wird. In diesem Falle wird der zusätzliche Schalter 48 nicht benötigt.

Bei Fahrzeugen mit großer Heckklappe kann es zur Beschädigung des Heckscheibenrollos 28 kommen, wenn die Rollobahn 29 ausgefahren ist und die Heckklappe geöffnet wird. Um eine solche Beschädigung mit Sicherheit auszuschließen, ist der Schalter 51 vorhanden. Der Schalter 51 wird beispielsweise geschlossen, wenn die Heckklappe entriegelt wird. Das Heckscheibenrollo 28 wird dann umgehend eingefahren und ist bereits völlig eingefahren, ehe die Heckklappe in die vollständig geöffnete Stellung gelangt.

Es versteht sich, dass zum Umsetzen der oben beschrieben Steuerprozeduren zweckmäßigerweise die Steuereinrichtung 34 auf einem Mikroprozessor basiert, der seinen eigenen Speicher und sein eigenes Programm enthält. Eine solche Lösung ist vorteilhaft, wenn das Fahrzeug modular mit Fensterrollos nachgerüstet werden kann. Es ist auch ohne weiteres verständlich, dass die Steuereinrichtung 34 nicht nur das Heckscheibenrollo 28 sondern auch weitere Seitenfensterrollos betätigen kann, wobei dann unter Umständen weitere Lichtsensoren 45 vorgesehen sind und die Steuereinrichtung 34 für jeden Antriebsmotor jedes Seitenfensterrollos einen eigenen Stromausgang 36 aufweist.

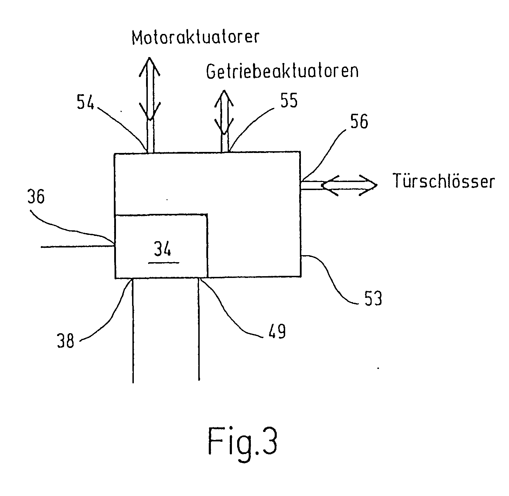

Gemäß Fig. 3 kann die beschriebene Steuereinrichtung 34 mit den angeschlossenen Signalisierungsmitteln auch Bestandteil einer zentralen Fahrzeugsteuerung 53 sein, wie sie in Figur 3 stark schematisiert angegeben ist. Die zentrale Fahrzeugsteuerung 53 weist beispielsweise mehrpolige Ausgänge 54, 55 oder 56 auf, über die lediglich beispielhaft genannt Motoraktuatoren zur Ventilverstellung, Getriebeaktuatoren zum Schalten des Getriebes oder Türschlösser betätigt werden.

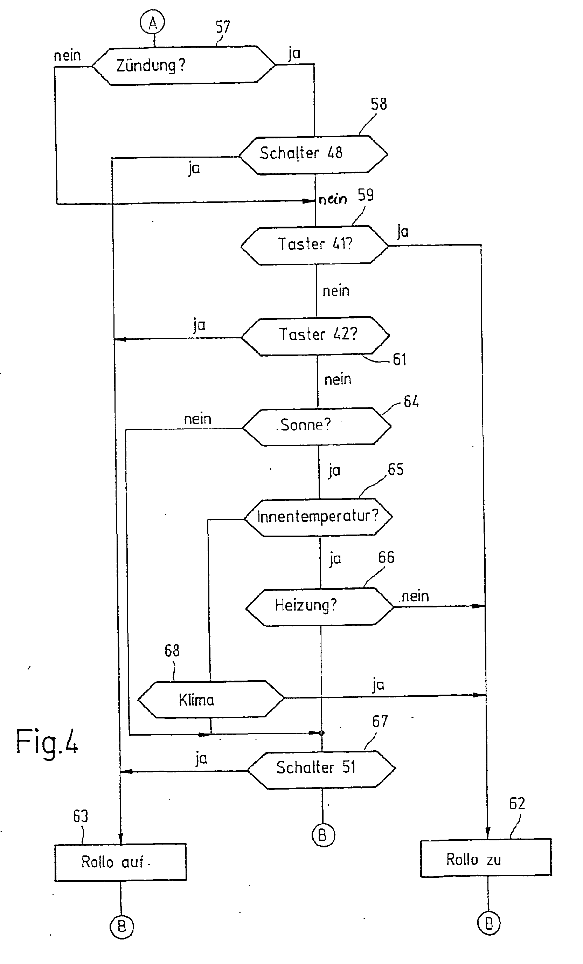

Fig. 4 zeigt ein vereinfachtes Flussdiagramm, wie es in der Steuerungseinrichtung 34 ablaufen kann. Das Programm beginnt bei A und fragt zunächst in einem Abfrageblock 57 ab, ob die Zündung eingeschaltet ist oder nicht, was auf eine Abfrage des Signalzustands an dem Eingang 52 hinausläuft. Wenn die Zündung eingeschaltet ist, wird der Schalter 48 überprüft, der das Einlegen des Rückwärtsgangs signalisiert. Falls die Zündung nicht eingeschaltet ist, kann diese Abfrage übersprungen werden, d.h. wenn bei ausgeschalteter Zündung der Rückwärtsgang eingelegt wird, hat dies auf den Zustand des Heckscheibenrollos keinen Einfluss.

Der Zustand des Schalters 48 wird in einem Abfrageblock 58 überprüft und führt zu den oben erwähnten Konsequenzen. Wenn der Schalter 48 nicht betätigt ist, fährt das Programm mit Abfrageblöcken 59 und 61 fort, in denen der vom Fahrer manuell zu betätigende Taste 41 bzw. 43 überprüft wird. Ist der Taster 41 betätigt geht das Programm zu einem Anweisungsblock 62, an dem bewirkt wird, dass der Stromausgang 36 für eine vorbestimmte Zeit Strom aus dem Stromeingang 35 enthält, und zwar mit einer Polarität, die dem Ausfahren des Heckscheibenrollos 28 entspricht. Von dort geht das Programm zu dem Punkt B, wo unter Umständen eine andere Programmroutine angesprungen wird oder aber zu dem Startpunkt A zurückgekehrt wird.

Wurde im Abfrageblock 61 festgestellt, dass der Fahrer den Taster 42 zum Einfahren betätigt hat, geht das Programm zu einem Anweisungsblock 63, der wiederum dafür sorgt, dass der Stromausgang 36 Strom aus dem Stromeingang 35 erhält, jedoch mit einer Polarität, die dem Einfahren der Rollobahn 29 entspricht. Anschließend gelangt das Programm zu dem Programmpunkt B wie zuvor erwähnt.

Wurde keiner der Taster 41 und 42 betätigt, wird in einem Abfrageblock 64 das Signal geprüft, das der Licht- oder Sonnensensor 45 liefert. Wird eine starke Sonneneinstrahlung festgestellt, wird in einem Abfrageblock 65 die Innentemperatur überprüft, die mit Hilfe des Temperatursensors 46 erfasst wird. Wenn die Temperatur über einem vorbestimmten Wert liegt, wird nachfolgend in einem Abfrageblock 66 ermittelt, ob die Heizung eingeschaltet ist. Wenn nein, verzweigt das Programm zu dem bereits erläuterten Anweisungsblock 62. Andernfalls fährt es mit einem Abfrageblock 67 fort, wo der Zustand des Schalters 51 für die Heckklappe überprüft wird. Ist die Heckklappe geschlossen, gelangt das Programm zu dem Programmpunkt B, andernfalls verzweigt es zu dem Anweisungsblock 63 und öffnet das Heckscheibenrollo 28.

Wenn das Programm in dem Abfrageblock 65 feststellt, dass die Innentemperatur an sich zu niedrig ist, um das Rollo zu betätigen, verzweigt das Programm zu einem Abfrageblock 68 und überprüft den Zustand der Klimaanlage. Wenn die Klimaanlage eingeschaltet ist, wird über den Anweisungsblock 62 fortgefahren, andernfalls kehrt das Programm zu dem Anfang des Abfrageblockes 67 zurück.

Wird in dem Abfrageblock 64 keine ausreichende Sonneneinstrahlung festgestellt, verzweigt das Programm unmittelbar zu dem Eingang des Abfragblocks 67.

Eine Rollosteuerung für Fensterrollos 17,28 von Kraftfahrzeugen enthält eine Steuereinrichtung 23,71. Die Steuereinrichtung 23,71 erhält Signale von einem manuell durch den Fahrer bzw. Fahrzeuginsassen zu betätigenden Schalter 41,42, um willkürlich das Fensterrollo 17,28 ein- oder ausfahren zu können.

Zusätzlich sind Signalisierungsmittel 45,46,48,51 vorhanden, die auf sonstige äußere Ereignisse Ansprechen, um unabhängig von der Betätigung durch den Fahrer das betreffende Fensterrollo in einen Zustand zu bringen, der am besten zu dem betreffenden gemeldeten äußeren Ereignis passt.

## Patentansprüche

1. Rollosteuerung für ein Fensterrollo (17,28) eines Kraftfahrzeugs mit einer zentralen Kraftfahrzeugsteuerung, wobei das Rollo (17,28) mit einer kraftbetriebenen Antriebseinrichtung (88) ausgestattet ist, durch die eine Rollobahn (18,29) des Rollos (17,28) wahlweise und zumindest teilweise ein- oder auszufahren ist,
mit einer Steuereinrichtung (34), die derart gestaltet ist, dass sie zum Steuern der Antriebseinrichtung geeignet ist, und die als Programmstück in die zentrale Kraftfahrzeugsteuerung (53) eingebettet ist,
mit ersten Signalisierungsmitteln (45,46,48,51), deren Zustand ereignisabhängig ist und die mit der Steuereinrichtung (34) zusammenwirken, um die Steuereinrichtung (34) zu veranlassen die Antriebseinrichtung zum Ausfahren des Rollos in Gang zu setzen, wenn die Zündung ausgeschaltet ist und eine starke Sonneneinstrahlung erfasst wird.

2. Rollosteuerung nach Anspruch 1, **dadurch gekennzeichnet, dass** zusätzlich zweite Signalisierungsmittel (41,42) vorhanden sind, deren Zustand unmittelbar durch einen Benutzer des Fahrzeugs festzulegen ist, um die Steuereinrichtung (34) zu veranlassen die Antriebseinrichtung in Gang oder still zu setzen.

3. Rollosteuerung nach Anspruch 1, **dadurch gekennzeichnet, dass** der Steuereinrichtung (34) wenigstens einen Schalter zugeordnet ist.

4. Rollosteuerung nach Anspruch 1, **dadurch gekennzeichnet, dass** die Steuereinrichtung (34) einen ersten Steuereingang (43,44,47,49,52) aufweist, in den ein Signal der ersten Signalisierungsmittel (45,46,48,51) einzuspeisen ist oder an den die ersten Signalisierungsmittel (45,46,48,51) angeschlossen sind.

5. Rollosteuerung nach Anspruch 2, **dadurch gekennzeichnet, dass** die Steuereinrichtung (34) einen zweiten Steuereingang (38,39) aufweist, in den ein Signal der zweiten Signalisierungsmittel (41,42) einzuspeisen ist oder an den die zweiten Signalisierungsmittel (41,42) angeschlossen sind.

6. Rollosteuerung nach Anspruch 2, **dadurch gekennzeichnet, dass** die zweiten Signalisierungsmittel (41,42) wenigsten einem Schalter oder Taster umfassen.

7. Rollosteuerung nach Anspruch 2, **dadurch gekennzeichnet, dass** die zweiten Signalisierungsmittel von einer Programmvariablen gebildet sind, deren Wert von wenigsten einem Schalter (41,42) oder Taster definiert wird.

8. Rollosteuerung nach Anspruch 1, **dadurch gekennzeichnet, dass** die ersten Signalisierungsmittel (45,46, 48,51) wenigsten von einem Schalter (48,51) oder Taster gebildet sind.

9. Rollosteuerung nach Anspruch 1, **dadurch gekennzeichnet, dass** die ersten Signalisierungsmittel (45,46,48, 51) von einer Programmvariablen gebildet sind, deren Wert von wenigsten einem Schalter (48,51) oder Taster definiert wird.

10. Rollosteuerung nach Anspruch 1, **dadurch gekennzeichnet, dass** die ersten Signalisierungsmittel (45,46, 48,51) einen Sensor (45,46,48,51) umfassen.

11. Rollosteuerung nach Anspruch 10, **dadurch gekennzeichnet, dass** der Sensor (45) ein lichtempfindlicher Sensor ist.

12. Rollosteuerung nach Anspruch 10, **dadurch gekennzeichnet, dass** der Sensor (45) eine Fotodiode ist.

13. Rollosteuerung nach Anspruch 10, **dadurch gekennzeichnet, dass** der Sensor (45) ein Fotowiderstand ist.

14. Rollosteuerung nach Anspruch 10, **dadurch gekennzeichnet, dass** der Sensor (45,46,48,51) an einer Stelle angeordnet ist, die bei ausgefahrener Rollobahn (18,29) abgeschattet ist.

15. Rollosteuerung nach Anspruch 1, **dadurch gekennzeichnet, dass** die Steuereinrichtung (34) Zeitmittel enthält, derart, dass nach einer vorgegebenen Zeitspanne die Antriebseinrichtung in der umgekehrten Bewegungsrichtung in Gang gesetzt wird.

16. Rollosteuerung nach Anspruch 1, **dadurch gekennzeichnet, dass** die Steuereinrichtung (34,52) einen Speicher enthält, in dem der vorhergehende Betriebszustand gespeichert wird.

## Claims

1. Roller blind control system for a window blind (17, 28) of a motor vehicle with a central vehicle control system, wherein the roller blind (17, 28) is equipped with a power-operated drive means (88), by means of which a blind sheet (18, 29) of the roller blind (17, 28) can be selectively and at least partially retracted and extended,
with a control means (34), which is configured so that it is suitable for controlling the drive means and which is embedded as program part into the central vehicle control system (53),
with first signalling elements (45, 46, 48, 51), the status of which is event-dependent and which cooperate with the control means (34) in order to cause the control means (34) to set the drive means in operation to extend the roller blind if the ignition is switched off and an intense insolation is detected.

2. Roller blind control system according to claim 1, **characterised in that** second signalling elements (41, 42) are additionally provided, the status of which can be determined directly by a user of the vehicle in order to cause the control means (34) to set the drive means in operation or to stop same.

3. Roller blind control system according to claim 1, **characterised in that** the control means (34) has at least one associated switch.

4. Roller blind control system according to claim 1, **characterised in that** the control means (34) has a first control input (43, 44, 47, 49, 52), into which a signal of the first signalling elements (45, 46, 48, 51) can be fed or to which the first signalling elements (45, 46, 48, 51) are connected.

5. Roller blind control system according to claim 2, **characterised in that** the control means (34) has a second control input (38, 39), into which a signal of the second signalling elements (41, 42) can be fed or to which the second signalling elements (41, 42) are connected.

6. Roller blind control system according to claim 2, **characterised in that** the second signalling elements (41, 42) comprise at least one switch or pushbutton.

7. Roller blind control system according to claim 2, **characterised in that** the second signalling elements are formed by a program variable, the value of which is defined by at least one switch (41, 42) or pushbutton.

8. Roller blind control system according to claim 1, **characterised in that** the first signalling elements (45, 46, 48, 51) are formed at least by one switch (48, 51) or pushbutton.

9. Roller blind control system according to claim 1, **characterised in that** the first signalling elements (45, 46, 48, 51) are formed by a program variable, the value of which is defined by at least one switch (48, 51) or pushbutton.

10. Roller blind control system according to claim 1, **characterised in that** the first signalling elements (45, 46, 48, 51) comprise a sensor (45, 46, 48, 51).

11. Roller blind control system according to claim 10, **characterised in that** the sensor (45) is a light-sensitive sensor.

12. Roller blind control system according to claim 10, **characterised in that** the sensor (45) is a photodiode.

13. Roller blind control system according to claim 10, **characterised in that** the sensor (45) is a photoresistor.

14. Roller blind control system according to claim 10, **characterised in that** the sensor (45, 46, 48, 51) is arranged at a location, which is shaded when the blind sheet (18, 29) is extended.

15. Roller blind control system according to claim 1, **characterised in that** the control means (34) contains time elements such that after a given period of time the drive means is set in operation in the reverse direction of movement.

16. Roller blind control system according to claim 1, **characterised in that** the control means (34, 52) contains a storage means, in which the preceding operating status is stored.

## Revendications

1. Système de commande pour un store de fenêtre (17, 28) d'un véhicule automobile doté d'une commande centrale, ce store (17, 28) comportant un dispositif d'entraînement (88) alimenté en force motrice, par lequel une bande (18, 29) du store (17, 28) peut être à volonté sortie ou rentrée au moins en partie, ce système comportant
- un dispositif de commande (34) qui est configuré de manière à pouvoir commander le dispositif d'entraînement et qui est intégré en tant que programme à la commande centrale (53) du véhicule,
- des premiers moyens de signalisation (45, 46, 48, 51) dont l'état est fonction des événements et qui coopèrent avec le dispositif de commande (34) de manière à activer celui-ci pour qu'il amène le dispositif d'entraînement à faire sortir le store quand l'allumage est coupé et qu'est détecté un fort rayonnement solaire.

2. Système de commande selon la revendication 1, **caractérisé en ce qu'**il comprend en plus des seconds moyens de signalisation (41, 42) dont l'état doit être fixé directement par un utilisateur du véhicule automobile pour mettre le dispositif d'entraînement en marche ou pour l'arrêter.

3. Système de commande selon la revendication 1, **caractérisé en ce qu'**au dispositif de commande est affecté un contacteur.

4. Système de commande selon la revendication 1, **caractérisé en ce que** le dispositif de commande (34) présente une première entrée de commande (43, 44, 47, 49, 52) pour recevoir un signal des premiers moyens de signalisation (45, 46, 48, 51) ou à laquelle sont raccordés ces premiers moyens.

5. Système de commande selon la revendication 1, **caractérisé en ce que** le dispositif de commande (34) présente une seconde entrée de commande (38, 39) pour recevoir un signal des seconds moyens de signalisation (41, 42) ou à laquelle sont raccordés ces seconds moyens de signalisation (41, 42).

6. Système de commande selon la revendication 2, **caractérisé en ce que** les seconds moyens de signalisation (41, 42) comprennent au moins un commutateur ou un palpeur.

7. Système de commande selon la revendication 2, **caractérisé en ce que** les seconds moyens de signalisation (41, 42) sont constitués par une variable de programme, dont la valeur est définie par au moins un commutateur (41, 52) ou un palpeur.

8. Système de commande selon la revendication 1, **caractérisé en ce que** les premiers moyens de signalisation (45, 46, 48, 51) sont constitués par au moins un commutateur (48, 51) ou un palpeur.

9. Système de commande selon la revendication 1, **caractérisé en ce que** les premiers moyens de signalisation (45, 46, 48, 51) sont constitués par une variable de programme, dont la valeur est définie par au moins un commutateur (48, 51) ou un palpeur.

10. Système de commande selon la revendication 1, **caractérisé en ce que** les premiers moyens de signalisation (45, 46, 48, 51) comprennent un capteur (45, 46, 48,51).

11. Système de commande selon la revendication 10, **caractérisé en ce que** le capteur (45) est un capteur sensible à la lumière.

12. Système de commande selon la revendication 10, **caractérisé en ce que** le capteur (45) est une photodiode.

13. Système de commande selon la revendication 10, **caractérisé en ce que** le capteur (45) est une photorésistance.

14. Système de commande selon la revendication 10, **caractérisé en ce que** le capteur (45, 46, 48, 51) est placé en un endroit qui est à l'ombre quand la bande de store (18, 29) est sortie.

15. Système de commande selon la revendication 1, **caractérisé en ce que** le dispositif de commande (31) comprend des moyens de mesure de temps de manière qu'après un délai prédéfini, le dispositif d'entraînement est mis en marche dans le sens de déplacement inverse.

16. Système de commande selon la revendication 1, **caractérisé en ce que** le dispositif de commande (34, 52) contient une mémoire dans laquelle est enregistré l'état de fonctionnement précédent.
